# EUROPÄISCHE PATENTSCHRIFT

(11) **EP 2 550 240 B1**
(45) Veröffentlichungstag und Bekanntmachung des Hinweises auf die Patenterteilung: **15.05.2019**
(21) Anmeldenummer: 11710728.4
(22) Anmeldetag: 21.03.2011
(51) Int. Cl.: C04B 28/02

(54) **VERWENDUNG EINES KAMMPOLYMERS ZUR VERBESSERUNG DER VERARBEITBARKEIT VON HYDRAULISCH ABBINDENDEN ZUSAMMENSETZUNGEN**
USE OF A COMB POLYMER TO IMPROVE THE PROCESSABILITY OF HYDRAULICALLY SETTING COMPOSITIONS
UTILISATION D'UN POLYMÈRE PEIGNE POUR AMÉLIORER L'APTITUDE AU TRAITEMENT DES COMPOSITIONS À PRISE HYDRAULIQUE

(30) Priorität: 22.03.2010 EP 10157203
(43) Veröffentlichungstag der Anmeldung: 30.01.2013
(73) Patentinhaber: Sika Technology AG, 6340 Baar (CH)
(72) Erfinder: SULSER, Ueli, CH-8103 Unterengstringen (CH); HAMPEL, Christina, CH-5406 Rütihof (CH); ZIMMERMANN, Jörg, 8400 Winterthur (CH)
(74) Vertreter: Sika Patent Attorneys
(86) Internationale Anmeldenummer: PCT/EP2011/054209
(87) Internationale Veröffentlichungsnummer: WO 2011/117178

(56) Entgegenhaltungen:
- WO-A1-2005/090416
- GB-A- 2 279 655
- JP-A- 7 081 995
- JP-A- 11 217 255

## Beschreibung

### Technisches Gebiet

Die vorliegende Erfindung betrifft Zusatzmittel für hydraulisch abbindende Systeme, insbesondere Dispergiermittel für Betonzusammensetzungen.

### Stand der Technik

Polymere aus α,β-ungesättigten Carbonsäuren mit Polyalkylenglykol-Seitenketten werden in der Betontechnologie als Dispergiermittel, insbesondere als Verflüssiger, eingesetzt. Bei Zusatz solcher Polymere zu Zementen kann der Wasseranteil erniedrigt werden, was für die Verarbeitbarkeit und für die Stabilität des Betons von Vorteil ist. Diese Polymere haben eine Kammpolymerstruktur. Es gibt eine Reihe von solchen Kammpolymeren, welche neben Ester- und Carbonsäure-Gruppen auch Amidgruppen aufweisen. Im Stand der Technik werden zur Herstellung von gattungsgemäßen Kammpolymeren im Wesentlichen zwei Verfahren eingesetzt. In einem verbreiteten Verfahren werden solche Kammpolymere aus ungesättigten Carbonsäure-, Ester-, Ether-, Amid- und/oder Imid-funktionenellen Monomeren durch radikalische Polymerisation hergestellt. In einem weiteren bekannten Verfahren werden die Polymere in einer sogenannten polymeranalogen Umsetzung aus einer Polycarbonsäure, umfassend mindestens eine Acrylsäureeinheit oder mindestens eine Methacrylsäureeinheit, mit den jeweiligen Alkoholen und/oder Aminen hergestellt. Dabei wird das Kammpolymer durch Veresterung und/oder Amidierung der Polycarbonsäure oder einem Salz oder Anhydrid davon erhalten.

Trotz der Verbesserung bezüglich der Verflüssigung ist es jedoch immer noch eine Herausforderung, Verflüssiger für die unterschiedlichen Verarbeitungsbedingungen bereitzustellen, die weltweit zur Herstellung von Beton eingesetzt werden. Das ist den verschiedenen Arten von lokalen Klimas, Zementen, Aggregaten, Zementersatzfüllstoffen usw. zuzuschreiben, sowie den unterschiedlichen Produkten, wie Fertig-, Transport-, Spritzbeton, selbstverdichtender Beton oder vor Ort gemischter Beton. Spezielle Zusätze müssen daher bereitgestellt werden, die unter völlig unterschiedlichen Bedingungen wirksam sind.

Es besteht daher ein Bedürfnis nach neuen Zusatzmitteln, die als Dispergiermittel, insbesondere als Verflüssiger für hydraulisch abbindende Systeme, und insbesondere für neue Einsatzgebiete, verwendet werden können.

Ein besonderes Problem bei bekannten Verflüssigern auf der Basis von Kammpolymeren besteht darin, dass aufgrund der sehr starken Wasserreduktion die Verarbeitbarkeit zu Beginn zwar gut ist, danach aber schnell abnimmt, so dass die hydraulisch abbindende Zusammensetzung nach kurzer Zeit nur noch schlecht verarbeitbar ist.

### Aufgabe der Erfindung

Der Erfindung liegt die Aufgabe zugrunde, die oben beschriebenen Probleme zu überwinden. Es sollen neue Verflüssiger zur Verwendung in abbindbaren Zusammensetzungen bereitgestellt werden, die besondere und vorteilhafte Eigenschaften aufweisen. Die Polymere sollen in hydraulisch abbindenden Zusammensetzungen eine ausreichende verflüssigende Wirkung zeigen. Der Erfindung liegt insbesondere das Problem zugrunde, Polymere bereitzustellen, die eine gute Langzeitverarbeitbarkeit aufweisen.

### Darstellung der Erfindung

Die der Erfindung zugrunde liegende Aufgabe wird überraschenderweise gelöst durch Verwendungen gemäß den Patentansprüchen.

Gegenstand der Erfindung ist die Verwendung eines Kammpolymers zur Verbesserung der Verarbeitbarkeit von hydraulisch abbindenden Zusammensetzungen, wobei das Kammpolymer über Ester-, Amid- und/oder Ethergruppen an eine Hauptkette angebundene Seitenketten aufweist, wobei die Hauptkette mindestens eine Acrylsäureeinheit A oder ein Salz davon und mindestens eine Methacrylsäureeinheit M oder ein Salz davon aufweist, wobei das Kammpolymer zudem mindestens einer Struktureinheit B der Formel (I) umfasst; 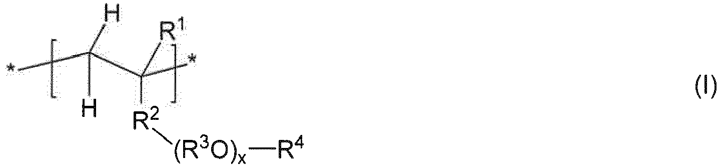 wobei
R¹ unabhängig voneinander für H oder CH₃ steht;
R² unabhängig voneinander für ein Estergruppe -CO-O- oder für eine Amidgruppe -CO-NH- steht;
R³ unabhängig voneinander für eine C₂ - C₆ Alkylengruppe, insbesondere für eine Ethylen- oder Propylengruppe steht,
R⁴ unabhängig voneinander für H, einen C₁ - C₁₂ Alkyl- oder Cycloalkylrest, einen C₇ - C₂₀ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, steht, und
x unabhängig voneinander ein Wert zwischen 3 und 250, vorzugsweise zwischen 5 und 150 ist,
wobei die Hauptkette des Kammpolymers ein lineares Copolymer ist, dass aus der mindestens einen Acrylsäureeinheit **A** oder dem Salz oder Anhydrid davon, und der Methacrylsäureeinheit **M** oder dem Salz oder Anhydrid davon durch Polymerisation erhalten wurde,
wobei die Struktureinheit **B** Bestandteil dieses linearen Copolymers ist und wobei das Kammpolymer an der Gesamtzahl aller (R³O)ₓ-Einheiten einen Anteil von Ethylenoxideinheiten von mindestens 30 Mol-% aufweist und wobei das Kammpolymer durch Veresterung und/oder Amidierung einer Polycarbonsäure oder einem Salz oder Anhydrid davon hergestellt wurde.

Das Kammpolymer weist bevorzugt 5 bis 95 Mol-%, insbesondere 5 bis 50 Mol.-% Acrylsäureeinheiten A, 5 bis 95 Mol-%, insbesondere 5 bis 50 Mol.-% Methacrylsäureeinheiten M und 5 bis 50 Gew.-% Monomere mit über Ester-, Amid- und/oder Ethergruppen angebundene Seitenketten, jeweils bezogen auf die Gesamtzahl aller monomeren Einheiten in der Hauptkette des Kammpolymers.

Die mindestens eine Acrylsäureeinheit **A** und die mindestens eine Methacrylsäureeinheit **M** können teilweise oder vollständig neutralisiert sein. Die Säureeinheit kann als freie Säure oder auch als Salz oder Teilsalz oder Anhydrid vorliegen, wobei der Term "Salz" hier und im Folgenden neben den klassischen Salzen, wie sie durch Neutralisation mit einer Base erhalten werden, auch komplexchemische Verbindungen zwischen Metallionen und den Carboxylat- oder Carboxyl-Gruppen als Liganden umfasst. Die klassischen Salze werden insbesondere durch Neutralisation mit Natriumhydroxid, Calciumhydroxid, Magnesiumhydroxid, Ammoniumhydroxid oder einem Amin erhalten.

Die Struktureinheit **B** der Formel (I) kann je nach Auswahl des Restes R² ein Ester oder ein Amid sein. In einem Kammpolymer können dabei sowohl Ester als auch Amide enthalten sein.

In einer bevorzugten Ausführungsform der Erfindung weist das Kammpolymer mindestens eine Struktureinheit **B** der Formel (I) mit R¹ gleich H und mindestens eine Struktureinheit **B** der Formel (I) mit R¹ gleich CH₃ auf, wobei R² bevorzugt eine Estergruppe ist. Das heisst, dass bei einem bevorzugten Kammpolymer ein Teil der Struktureinheiten **B** Polyoxyalkylenacrylateinheiten und ein anderer Teil der Struktureinheiten **B** Polyoxyalkylenmethacrylateinheiten darstellen.

In einer bevorzugten Ausführungsform steht -(R³O)ₓ- für eine C₂ bis C₄ Polyoxyalkylengruppe, insbesondere für eine Polyoxyethylengruppe oder eine Polyoxypropylengruppe oder Mischungen von Oxyethylen- und Oxypropyleneinheiten in beliebiger Sequenz, beispielsweise zufällig, alternierend oder blockweise.

R⁴ ist vorzugsweise nicht H und besonders bevorzugt ein Methylrest. Das Kammpolymer weist an der Gesamtzahl aller (R³O)ₓ-Einheiten einen Anteil von Ethylenoxideinheiten von 50 bis 100 Mol-%, insbesondere 80 bis 100 Mol.-% auf. Besonders bevorzugt sind in dem Kammpolymer ausschließlich Ethylenoxideinheiten vorhanden.

In einer bevorzugten Ausführungsform der Erfindung weist das Kammpolymer mindestens eine weitere Struktureinheit **C** auf, die von den Struktureinheiten **A, B** und **M** verschieden ist, und die ausgewählt ist aus einer Ether-, Ester, Amid- oder Imideinheit, einer Säureeinheit, ausgewählt aus Carbonsäure, Sulfonsäure, Phosphonsäure, Phosphorsäureester, Carbonylamidomethylpropansulfonsäure und deren Salzen, oder einer Polyoxyalkylenoxycarbonyl-, Polyoxyalkylenaminocarbonyl-, Polyoxyalkylenoxyalkyl-, Polyoxyalkylenoxy-, Hydroxyethyloxycarbonyl-, Acetoxy-, Phenyl- oder *N*-Pyrrolidonylgruppe. Vorzugsweise umfasst die weitere Struktureinheit **C** Polyoxyalkylengruppen, vorzugsweise Polyoxyethylengruppen, Polyoxypropylengruppen oder Mischungen davon. Beispielsweise kann die Struktureinheit **C** eine Estereinheit sein, welche durch Umsetzung einer Mono- oder Dicarbonsäure mit einem Alkylalkohol, insbesondere einem C₆-C₂₀ Alkylalkohol hergestellt wird.

Das Kammpolymer kann eine Kombination von verschiedenen Struktureinheiten der jeweiligen Struktureinheiten von **A, M, B** und gegebenenfalls aufweisen. Beispielsweise können mehrere Säureeinheiten **A** und **M** gemischt im Kammpolymer vorkommen, welche gar nicht oder ganz neutralisiert sind. Alternativ können mehrere unterschiedliche Ester- und/oder Amideinheiten **B** gemischt im Kammpolymer vorkommen, so zum Beispiel mehrere Estereinheiten **B** mit verschiedenen Substituenten R³. Bevorzugt ist beispielsweise die gemeinsame Verwendung von Polyoxyalkylenen, insbesondere von Polyoxyethylen mit Polyoxypropylen, oder die gemeinsame Verwendung von Polyoxyalkylenen, insbesondere von Polyoxyethylen, mit unterschiedlichem Molekulargewicht.

In einer bevorzugten Ausführungsform der Erfindung umfasst das Kammpolymer
a) 5 bis 95 Mol-%, vorzugsweise 10 bis 80 Mol-%, besonders bevorzugt 20 bis 60 Mol.-% Acrylsäureeinheiten **A,**
b) 5 bis 95 Mol-%, vorzugsweise 10 bis 80 Mol-%, besonders bevorzugt 20 bis 60 Mol.-% Methacrylsäureeinheiten **M,**
c) 5 bis 50 Mol-%, vorzugsweise 10 bis 40 Mol-% der Struktureinheit **B,** und
d) 0 bis 30 Mol-%, vorzugsweise 0 bis 15, insbesondere 0 bis 5 Mol-% der Struktureinheit **C**,
jeweils bezogen auf die Gesamtzahl aller monomeren Einheiten in der Hauptkette des Kammpolymers.

In einer weiteren bevorzugten Ausführungsform der Erfindung umfasst das Kammpolymer
a) 30 bis 70 Mol-%, vorzugsweise 40 bis 60 Mol-% Acrylsäureeinheiten **A,**
b) 30 bis 70 Mol-%, vorzugsweise 40 bis 60 Mol-% Methacrylsäureeinhei**ten M,**
c) 5 bis 50 Mol-%, vorzugsweise 10 bis 40 Mol-% der Struktureinheit **B,** und
d) 0 bis 30 Mol-%, vorzugsweise 0 bis 15, insbesondere 0 bis 5 Mol-% der Struktureinheit **C**,
jeweils bezogen auf die Gesamtzahl aller monomeren Einheiten in der Hauptkette des Kammpolymers.

Die Abfolge der einzelnen Struktureinheiten **A, M, B,** und **C** im Kammpolymer kann alternierend, statistisch, blockweise oder zufällig sein.

Das Kammpolymer weist vorzugsweise ein mittleres Molekulargewicht Mₙ im Bereich von 1000 bis 100'000 g/mol, vorzugsweise 2000 bis 70'000 g/mol, besonders bevorzugt 5000 bis 50'000 g/mol auf.

Erfindungsgemäß werden die Kammpolymere nach der polymeranalogen Reaktion hergestellt. Die polymeranaloge Umsetzung weist den Vorteil auf, dass aus Polycarbonsäuren durch Variation der Menge, der Art und dem Verhältnis von Alkoholen und Aminen Kammpolymere mit sehr unterschiedlichen und vorteilhaften Strukturen und Eigenschaften erhalten werden können. Überraschenderweise wurde festgestellt, dass bei dem erfindungsgemäßen Einsatz von Kammpolymeren, die durch polymeranaloge Reaktion hergestellt wurden, besonders vorteilhafte Eigenschaften erzielt werden, wobei insbesondere die Verarbeitbarkeit von Zementzusammensetzungen über längere Zeiträume gewährleistet wird. Die unterschiedlichen Eigenschaften werden wahrscheinlich durch unterschiedliche Verteilungen der Seitenketten im Polymer erhalten.

In einer bevorzugten Ausführungsform der Erfindung erfolgt die Veresterung und/oder Amidierung durch die Reaktion von
a) mindestens einer Polycarbonsäure umfassend mindestens eine Acrylsäureeinheit **A** und mindestens eine Methacrylsäureeinheit **M,** oder einem Salz oder Anhydrid dieser Polycarbonsäure; und
b) mindestens einer Verbindung, ausgewählt aus der Gruppe bestehend aus einer Monohydroxyverbindung **E** der Formel (II)

   HO-(R³O)ₓ-R⁴ (II)

   und einer Monoaminverbindung **F** der Formel (III)

   NH₂-(R³O)ₓ-R⁴ (III)

   wobei R³, R⁴ und x unabhängig voneinander ausgewählt sind wie oben angegeben.

Polymeranaloge Umsetzungen sind an sich bekannt und werden beispielsweise in WO97/35814A1, WO95/09821 A2, DE 100 15 135A1, EP 1138697A1, EP1348729A1 sowie WO2005/090416A1 beschrieben. Details zur polymeranalogen Umsetzung werden beispielsweise offenbart in EP 1 138 697 B1 auf Seite 7 Zeile 20 bis Seite 8 Zeile 50, sowie in den darin enthaltenen Beispielen, oder in EP 1 061 089 B1 auf Seite 4, Zeile 54 bis Seite 5 Zeile 38 sowie in den Beispielen. Das Kammpolymer kann auch in festem Aggregatszustand erhalten werden, wie in EP 1 348 729 A1 auf Seite 3 bis Seite 5 sowie in dessen Beispielen beschrieben.

Es wird bevorzugt ein Kammpolymer verwendet, das erhältlich ist durch die Reaktion von (a) mindestens einer Polycarbonsäure umfassend mindestens eine Acrylsäureeinheit **A** und mindestens eine Methacrylsäureeinheit **M** oder einem Salz oder Anhydrid dieser Polycarbonsäure; und (b) mindestens einer Monohydroxyverbindung **E** und/oder mindestens einer Monoaminverbindung **F** umfassend mindestens eine Polyoxyalkylengruppe, und gegebenenfalls (c) mindestens eine weitere Verbindung **D.**

Unter "Polycarbonsäure umfassend mindestens eine Acrylsäureeinheit **A** und mindestens eine Methacrylsäureeinheit **M"** versteht man ein Copolymer, das durch Polymerisation von Acrylsäure und Methacrylsäure oder deren Salzen oder erhältlich ist.

Die Polycarbonsäure kann hierbei als freie Säure oder als Salz vorliegen, wobei auch nur ein Teil der Säuregruppen als Salz vorliegen kann. Der Begriff "Salz" umfasst erfindungsgemäß neben den klassischen Salzen, die durch Neutralisation mit einer Base erhalten werden, auch komplexe Verbindungen mit Metallionen und den Carboxylat-Gruppen als Liganden.

Das Copolymer der Acryl- und Methacrylsäure wird durch eine radikalische Polymerisation nach üblichen Verfahren erhalten. Sie kann in Lösungsmittel, bevorzugt in Wasser, erfolgen. Diese radikalische Polymerisation erfolgt bevorzugt in Gegenwart von mindestens einem Molekulargewichtsregler, insbesondere einer anorganischen oder organischen Schwefelverbindung, wie beispielsweise Mercaptanen, oder einer Phosphorverbindung. Das Copolymer der Acryl- und Methacrylsäure weist vorzugsweise ein Molekulargewicht M_{w} von 500 bis 20'000 g/mol, bevorzugt von 2'000 bis 15'000 g/mol, besondere bevorzugt von 3'500 bis 10000 g/mol, auf.

Die Monohydroxyverbindung **E** ist vorzugsweise mit unter üblichen Reaktionsbedingungen nicht reaktiven Endgruppen einseitig verschlossen. Bevorzugt handelt es sich hierbei um ein Polymer mit einem Polyalkylenglykol-Grundgerüst. Die Monohydroxyverbindung **E** weist die Formel (II) auf

HO-(R³O)ₓ-R^{4'} (II)

wobei R³ unabhängig voneinander eine C₂ - C₄Alkylengruppe bedeutet mit einer Reihenfolge der (R³O)-Einheiten in irgendeiner möglichen Sequenz; wobei R^{4'} für einen C₁ - C₁₂ Alkyl- oder Cycloalkylrest, einen C₇ - C₂₀ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, steht; und wobei y unabhängig voneinander für 3 bis 250, vorzugsweise 5 bis 150 steht.

Bevorzugt sind Monohydroxyverbindungen **E** der Formel (II) mit einer Methyl-, Ethyl-, i-Propyl- oder n-Butylgruppe, insbesondere mit einer Methylgruppe, als Substituent R^{4'}. Vorzugsweise steht R³ unabhängig voneinander für eine C₂-Alkylengruppe und/oder eine C₃-Alkylengruppe. Bevorzugt handelt es sich bei **E** um Mischpolymerisate aus Ethylenoxid/Propylenoxid, mehr bevorzugt um einseitig Endgruppen-verschlossenes Polyoxyethylen. Mischungen mehrerer unterschiedlicher Verbindungen der Gruppe **E** sind ebenfalls möglich. So können beispielsweise einseitig Endgruppen-verschlossene Polyoxyethylene mit unterschiedlichen Molekulargewichten gemischt werden, oder es können beispielsweise Mischungen von einseitig Endgruppen-verschlossenen Polyoxyethylenen mit einseitig Endgruppen-verschlossenen Mischpolymeren aus Ethylenoxid und Propylenoxid oder einseitig Endgruppen-verschlossenen Polyoxypropylenen verwendet werden.

In einer bevorzugten Ausführungsform ist die Monohydroxyverbindung **E** ein einseitig Endgruppen-verschlossenes Polyoxyalkylen mit einem Molekulargewicht M_{w} von 500 bis 10'000 g/mol, insbesondere von 800 bis 8000 g/mol, bevorzugt von 1000 bis 6000 g/mol. Geeignet ist auch eine Mischung von einseitig Endgruppen-verschlossenen Polyoxyalkylenen mit unterschiedlichem Molekulargewicht, beispielsweise die Mischung von Polyoxyalkylen mit einem Molekulargewicht von 1'000 g/mol mit Polyoxyalkylen mit einem Molekulargewicht von 5'000 g/mol.

Zusätzlich zur Monohydroxyverbindung **E** kann auch eine Monoaminverbindung **F** eingesetzt werden. Dadurch erfolgt die Bildung von Amidgruppen. Typische Beispiele solcher Monoaminverbindungen **F** lassen sich durch die Formel (III) darstellen:

NH₂-(R³O)ₓ-R⁴ (III)

Die Substituenten R³ und R⁴ beziehungsweise der Index x weisen unabhängig voneinander dieselben Bedeutungen auf wie bereits oben für die Formel (I) definiert.

Beispiele für solche Monoaminverbindungen **F** sind α-Methoxy-ω-Amino-Polyoxyethylen, α-Methoxy-ω-Amino-Polyoxypropylen und α-Methoxy-ω-Amino-Oxyethylene-Oxypropylen-Copolymer. Besonderes bevorzugt als Monoaminverbindungen **F** sind α-Methoxy-ω-Amino-Oxyethylen-Oxypropylen-Copolymere oder α-Methoxy-ω-Amino-Polyoxyethylene, sowie andere Monoamine, welche beispielsweise von der Firma Huntsman unter dem Namen Jeffamine® der M-Serie vertrieben werden, sowie Mischungen davon. Meist bevorzugt sind α-Methoxy-ω-Amino-Oxyethylen-Oxypropylen-Copolymere. Solche Monoaminverbindungen **F** sind beispielsweise erhältlich aus einer mit Alkohol gestarteten Polymerisation von Ethylen- und/oder Propylenoxid gefolgt von Umwandlung der terminalen Alkoholgruppe in eine Amingruppe.

Als weitere Verbindung **D** ist eine Verbindung bevorzugt, welche mit der Polycarbonsäure oder dem Salz oder Anhydrid davon eine Reaktion eingehen kann. Beispiele für eine Verbindung **D** sind weitere Amine oder Alkohole, beispielsweise ein C₆-C₂₀ Alkylalkohol oder ein weiteres Mono- oder Diamin, vorzugsweise Monoamin. Es können auch mehrere verschiedene Verbindungen **D** eingesetzt werden.

Die Umsetzung der Polycarbonsäure oder dem Salz oder Anhydrid davon mit mindestens einer Monohydroxyverbindung **E** und/oder mit mindestens einer Monoaminverbindung **F,** und gegebenenfalls einer Verbindung **D** zu einem Kammpolymer erfolgt bei der polymeranalogen Reaktion typischerweise derart, dass zur Polycarbonsäure oder dem Salz oder Anhydrid davon unter Rühren die mindestens eine Monohydroxyverbindung **E** und/oder die mindestens eine Monoaminverbindung **F** zugegeben wird und auf die Umsetzungstemperatur aufgeheizt wird. Die Mischung wird weitergerührt und eventuell unter Vakuum oder durch Über- oder Durchleiten eines Gasstromes über beziehungsweise durch die Reaktionsmasse umgesetzt. Die Temperatur für diese Umsetzung liegt beispielsweise zwischen 140°C und 200°C. Die Reaktion ist aber auch bei Temperaturen zwischen 150°C und 175°C möglich. Falls zusätzlich zur Monohydroxyverbindung **E** eine Monoaminverbindung **F** eingesetzt wird, kann deren Zugabe gleichzeitig mit der Monohydroxyverbindung **E** oder aber zu einem späteren Zeitpunkt während dieses Reaktionsschrittes erfolgen.

In einer bevorzugten Ausführungsform wird diese Umsetzung in Gegenwart eines Veresterungskatalysators. Die Entfernung des Wassers aus der Reaktionsmischung kann unter Atmosphärendruck aber auch unter Vakuum erfolgen. Auch kann ein Gasstrom über oder durch die Reaktionsmischung geführt werden. Als Gasstrom kann Luft oder Stickstoff verwendet werden. Die Umsetzung kann mittels Messung der Säurezahl, beispielsweise durch Titration, verfolgt werden und bei einer gewünschten Säurezahl abgebrochen. Die Reaktion kann auch durch Aufheben des Vakuums und Abkühlen abgebrochen werden.

In einer bevorzugten Ausführungsform wird ein Copolymer, welches durch Polymerisation aus Acrylsäure und Methacrylsäure entstanden ist, mit einem Polyoxyethylen, das einseitig mit einer Methylgruppe abgeschlossen ist, verestert und gegebenenfalls mit einem Monoamin umgesetzt.

Bei der polymeranalogen Reaktion können neben Estergruppen und gegebenenfalls Amidgruppen auch Anhydridgruppen gebildet werden, die in einem zweiten Schritt vollständig oder teilweise mit einer Aminverbindung zu einem Amid umgesetzt werden können. Solche Verfahren werden beispielsweise in WO2005/090416A1 beschrieben.

Bei der erfindungsgemäßen Verwendung eines durch polymeranaloge Veresterung hergestellten Kammpolymers zu einem hydraulisch abbindenden Mörtel kann eine lang andauernde Dispergierwirkung und, bedingt dadurch, eine verbesserte Verarbeitbarkeit erzielt werden. Diese dispergierende Wirkung ist überraschenderweise effizienter und länger andauernd als bei Verwendung eines Kammpolymers gleichen Molekulargewichtes und gleicher stöchiometrischer Zusammensetzung, das durch radikalische Copolymerisation von Acryl- und Methacrylsäure und deren Ester hergestellt wurde.

Das erfindungsgemäß eingesetzte Polymer ist bevorzugt nicht durch eine radikalische Polymerisationsreaktion erhältlich, bei der das Copolymer aus entsprechenden ethylenisch ungesättigten Säure-, Ester- und Amidmonomeren in Gegenwart eines Radikalbildners hergestellt wird. Der Weg über die radikalische Polymerisation ist die im Stand der Technik am häufigsten verwendete Methode.

Unter dem Begriff "hydraulisch abbindende Zusammensetzung" werden Zusammensetzungen verstanden, die hydraulisch abbindende Bindemittel enthalten. Solche Bindemittel härten in Gegenwart von Wasser aus. Geeignete Zusammensetzungen und Bindemittel sind dem Fachmann im Bereich der Bauchemie bekannt. In einer bevorzugten Ausführungsform der Erfindung ist das hydraulische Bindemittel ausgewählt aus der Gruppe bestehend aus Zement, Gips, beispielsweise in Form von Anhydrid oder Halbhydrat, gebranntem Kalk und Mischungen von Zement mit Flugasche, Silica fume, Schlacke, Hüttensand oder Kalksteinfüller.

Übliche Zemente sind beispielsweise Portlandzemente oder Tonerdeschmelzzemente und deren jeweilige Mischungen mit üblichen Zusätzen. Als hydraulisch abbindende Zusammensetzung wird Zement besonders bevorzugt.

Die hydraulisch abbindenden Zusammensetzungen können übliche Zusätze, wie Flugaschen, Silica fume, Schlacke, Hüttensanden und Kalksteinfiller enthalten. Weiterhin sind Zuschlagstoffe wie Sand, Kies, Steine, Quarzmehl, Kreiden sowie als Additive übliche Bestandteile wie andere Betonverflüssiger, beispielsweise Lignosulfonate, sulfonierte Naphthalin-Formaldehyd Kondensate, sulfonierte Melamin-Formaldehyd-Kondensate oder Polycarboxylatether, Beschleuniger, Korrosionsinhibitoren, Verzögerer, Schwindreduzierer, Entschäumer oder Porenbildner möglich.

Das Kammpolymer wird als Dispergiermittel oder als Bestandteil eines Dispergiermittels eingesetzt. Das Dispergiermittel umfasst mindestens ein Kammpolymer. Das Dispergiermittel kann weitere Bestandteile enthalten. Beispiele für weitere Bestandteile sind Additive, wie andere Verflüssiger, beispielsweise Lignosulfonate, sulfonierte Naphthalin-Formaldehyd-Kondensate, sulfonierte Melamin-Formaldehyd-Kondensate oder Polycarboxylatether (PCE), Beschleuniger, Verzögerer, Schwindreduzierer, Entschäumer, Luftporenbildner oder Schaumbildner. Typischerweise beträgt dabei der Anteil des Kammpolymers 5 bis 100 Gewichts-%, insbesondere 10 bis 100 Gew.-%, bezogen auf das Gesamtgewicht des Dispergiermittels.

Je nach Reaktionsführung kann das Dispergiermittel zusätzlich zum Kammpolymer freie Verbindungen der Ausgangsstoffe, insbesondere freie Monohydroxyverbindungen wie beispielsweise einseitig Endgruppen-verschlossenes Polyoxyalkylen, insbesondere freies Methoxy-Polyoxyethylen, enthalten.

Das Dispergiermittel kann insbesondere verwendet werden als Verflüssiger, als Wasserreduzierer, zur Verbesserung der Verarbeitbarkeit und/oder zur Verbesserung der Fliessfähigkeit der damit hergestellten hydraulisch abbindenden Zusammensetzungen. Insbesondere können mit dem Dispergiermittel hydraulisch abbindende Zusammensetzungen mit verlängerter Verarbeitbarkeit hergestellt werden.

Bei der erfindungsgemäßen Verwendung zeigen die hydraulisch abbindenden Zusammensetzungen eine verlängerte Verarbeitbarkeit. Das bedeutet, dass die Zusammensetzung nach Zugabe von Wasser und Dispergiermittel, enthaltend das Kammpolymer, noch über vergleichsweise längere Zeit verarbeitbar bleibt, im Vergleich zu Zusammensetzungen, die das Kammpolymer nicht enthalten, oder im Vergleich zu Zusammensetzungen, die andere wasserreduzierende Zusatzmittel wie herkömmliche Verflüssiger enthalten. Der Vergleich erfolgt beispielsweise so, dass die Zusammensetzungen ohne Kammpolymer oder mit bekanntem Verflüssiger anfänglich den gleichen Wasser/Zement Wert (w/z-Wert) bei vergleichbarem Anfangsausbreitmaß, welches über die Dosierungsmenge des Vergleichsverflüssigers eingestellt wird, aufweist. Das Ausbreitmaß von hydraulisch abbindenden Zusammensetzungen, die das Kammpolymer enthalten, nimmt vorzugsweise nach einer bestimmten Zeit, beispielsweise nach 60 min oder nach 90 min, im Wesentlichen nicht oder nur wenig ab, so dass die Veränderung zwischen dem Anfangsausbreitmaß und dem Ausbreitmaß nach einer Stunde, vorzugsweise sogar nach 90 Minuten, möglichst klein ist.

Bei der erfindungsgemäßen Verwendung wird insbesondere die Langzeitverarbeitbarkeit verbessert. Die Langzeitverarbeitbarkeit ist über das Ausbreitmaß nach EN 1015-3 bestimmbar. Bevorzugt wird die Verarbeitbarkeit nach mehr als 30 min, nach mehr als 60 min und/oder nach mehr als 90 min verbessert, jeweils nach Zugabe des Wassers. Bevorzugt wird auch die Verarbeitbarkeit am Zeitpunkt nach 30 min, nach 60 min und/oder nach 90 min verbessert, jeweils nach Zugabe des Wassers. In einer bevorzugten Ausführungsform der Erfindung nimmt das Ausbreitmaß der hydraulisch abbindenden Zusammensetzung, gemessen nach EN 1015-3, nach 60 Minuten und/oder nach 90 Minuten um weniger als 20%, oder um weniger als 15%, bevorzugt um weniger als 10% oder um weniger als 5% ab. In einer bevorzugten Ausführungsform nimmt das Ausbreitmaß nach 90 min um weniger als 10% ab.

Bei einem Verfahren zur Herstellung einer hydraulisch abbindenden Zusammensetzung mit verlängerter Verarbeitbarkeit, können ein hydraulisch abbindendes Bindemittel, Wasser und ein erfindungsgemäße verwendbares Kammpolymer vermischt werden.

Das Kammpolymer wird vorzugsweise in einer Menge von 0.01 bis 5 Gew.-%, insbesondere 0,05 bis 2 Gew.% oder 0,1 bis 1 Gew.%, bezogen auf das Gewicht des Bindemittels, eingesetzt. Das Kammpolymer kann getrennt oder als Dispergiermittel vorgemischt in fester oder flüssiger Form zugegeben werden. Das Dispergiermittel wird bevorzugt in flüssiger Form eingesetzt, insbesondere als wässrige Lösung.

Das Kammpolymer oder das Dispergiermittel kann auch in festem Aggregatszustand eingesetzt werden, beispielsweise als Pulver, Schuppen, Pellets, Granulate oder Platten. Solche festen Zusätze lassen sich gut transportieren und lagern. Das Kammpolymer kann im festen Aggregatszustand ein Bestandteil einer sogenannten Trockenmischung, beispielsweise einer Zementzusammensetzung, sein, die über längere Zeit lagerfähig ist und typischerweise in Säcken abgepackt oder in Silos gelagert wird und zum Einsatz kommt. Eine solche Trockenmischung ist auch nach längerer Lagerungszeit einsetzbar und weist eine gute Rieselfähigkeit auf.

Das Kammpolymer kann einer hydraulisch abbindenden Zusammensetzung mit oder kurz vor oder kurz nach der Zugabe des Wassers zugefügt werden. Als besonders geeignet hat sich hierbei die Zugabe des Kammpolymers in Form einer wässrigen Lösung oder Dispersion, insbesondere als Anmachwasser oder als Teil des Anmachwassers, herausgestellt. Die Herstellung der wässrigen Lösung oder Dispersion erfolgt beispielsweise durch Zusetzen von Wasser bei der Herstellung des Kammpolymers oder durch nachträgliches Vermengen mit Wasser. Je nach Art des Kammpolymers entsteht eine Dispersion oder eine Lösung, wobei eine gleichmäßige Lösung bevorzugt ist.

Das Kammpolymer kann einer hydraulisch abbindenden Zusammensetzung jedoch auch vor oder während ihrem Mahlvorgang, beispielsweise dem Mahlprozess von Zementklinker zu Zement, zugegeben werden.

Gemäss einer vorteilhaften Ausführungsform wird wenigstens ein Teil des Kammpolymers vor und/oder während einem Mahlvorgang wenigstens einer Komponente der hydraulisch abbindenden Zusammensetzung beigegeben. In einer vorteilhaften Ausführungsform wird sämtliches Kammpolymer vor und/oder während dem Mahlvorgang zugegeben.

Das erfindungsgemäss verwendete Kammpolymer kann unabhängig von der Verbesserung der Verarbeitbarkeit von hydraulischen Zusammensetzungen auch als Mahlhilfsmittel, insbesondere zu Verbesserung der Mahleffizienz, in einem Mahlvorgang verwendet werden. Die Kammpolymere vermögen dabei im Allgemeinen die Effizienz des Mahlprozesses zu steigern. Vorteilhafterweise wird das Kammpolymer zugleich zur Verbesserung der Verarbeitbarkeit von hydraulischen Zusammensetzungen als auch als Mahlhilfsmittel verwendet. Der Mahlprozess kann insbesondere das Mahlen von Zementrohstoffen, Zementklinker, Zement und/oder Zementzusatzstoffen beinhalten. Zementzusatzstoffe können beispielsweise Hüttensande, Puzzolane, Flugaschen und/oder Kalkstein sein.

Grundsätzlich kann der Mahlprozess in Form eines Nass-, Halbnass- oder Trockenmahlverfahrens erfolgen. Beim Nass- und Halbnassverfahren werden die zu mahlenden Stoffe im Unterschied zum Trockenmahlverfahren in nassen Zustand vermischt und gemahlen. Insbesondere erfolgt der Mahlprozess in Form eines Trockenmahlverfahrens.

### Ausführungsbeispiele

### 1. Begriffe und Bezeichnungen

- AS:: Acrylsäure
- EO:: Ethylenoxid
- RP:: Umsetzung durch radikalische Polymerisation der monomeren Polyalkylenglykolester von Acryl- bzw. Methacrylsäure
- Jeff 2070:: Methylpolyalkylenglykolamin mit einem EO/PO-molaren Verhältnis 31/10
- MPEG1000:: Polyethylenglykol-monomethylether mit Molmasse 1000 g/mol
- MPEG 3000: Polyethylenglykol -monomethylether mit Molmasse 3000 g/mol
- M-1:: Mörtelmischung 1
- MAS:: Methacrylsäure
- Mw:: Gewichtsgemittelte Molmasse des Polymermoleküls
- Mn:: Zahlengemittelte Molmasse des Polymermoleküls
- P-1:: Erfindungsgemässes Polymer 1
- PA:: Polymeranaloge Umsetzungsreaktion von PAS bzw. PMAS.
- PAS:: Polyacrylsäure
- PMAS:: Polymethacrylsäure
- PO:: Propylenoxid
- V-1:: Vergleichsbeispiel 1
- VM-1:: Vergleichsmörtel-Mischung 1

### 2. Molekulargewichtsbestimmung

Die Bestimmung der Molekulargewichte erfolgte durch Gel-Permeations-Chromatographie (GPC) mit wässrigen Elutionsmitteln. Ein eng kalibrierter Na-Polyacrylatstandard diente als Kalibrierung. Als Elutionsmittel wurde eine 0.1 molare NaNO₃-Lösung mit pH = 12 verwendet. Flow 0.8ml/min, isokratisch. GPC-Säulen: Varian Ultrahydrogel 7.8 x 300 mm: Die Peaks wurden mittels eines Differentialrefraktometers Varian RI-4 und eines UV-Detektors Waters SAT/IN Module quantifiziert.

### 3. Herstellung der Polymere

Die wichtigsten Parameter der erfindungsgemässen Polymeren und der Vergleichspolymeren sind in Tabelle 1 zusammengefasst.

**Tabelle 1: Übersicht über die Herstellung der Polymeren**

| Polymer | AS mol | MAS mol | MPEG-1000 (mol) | MPEG-3000 (mol) | Jeff 2070 g | Reaktion | Regler* g | Mn |
|---|---|---|---|---|---|---|---|---|
| P-1 | 0.5 | 0.5 | 0.27 | | | PA | 4 | 11000 |
| P-2 | 0.5 | 0.5 | 0.20 | 0.073 | 2.5 | PA | 4 | 10500 |
| P-3 | 0.6 | 0.4 | 0.14 | 0.093 | 2.5 | PA | 4 | 10700 |
| P-4 | 0.6 | 0.4 | 0.20 | 0.073 | 2.5 | PA | 4 | 10100 |
| P-5 | 0.4 | 0.6 | 0.27 | | 2.5 | PA | 4 | 10100 |
| P-6 | 0.4 | 0.6 | 0.20 | 0.073 | 2.5 | PA | 4 | 11000 |
| P-7 | 0.5 | 0.5 | 0.34 | | 2.5 | PA | 4 | 11300 |
| V-1 | 1.0 | | 0.34 | | 2.5 | PA | 4 | 10900 |
| V-2 | | 1.0 | 0.34 | | 2.5 | PA | 9 | 11200 |
| V-3 | 1:1-Mischung V-1 / V-2 | | | | | | | |
| V-4 | 0.5 | 0.5 | 0.27 | | 2.5 | RP | 4 | 10200 |
| V-5 | 0.5 | 0.5 | 0.20 | 0.073 | 2.5 | RP | 4 | 10700 |
| V-6 | Sulfoniertes Naphthalin-Formaldehyd-Polykondensat | | | | | | | |

| | | | | | | | | |
|---|---|---|---|---|---|---|---|---|
| *Na-Hypophosphit-Monohydrat | | | | | | | | |

### 3.1. Herstellung von ca. 50%iqen wässrigen Polycarbonsäuren

### Polycarbonsäure 1: Polyacrylsäure

**Ansatz 1:**

| | |
|---|---|
| Vorlage: | 300 g dest. Wasser |
| Zulauf 1 | 720 g (10 mol) Acrylsäure |
| | 227 g dest. Wasser |
| Zulauf 2: | 40 g Natriumhypophosphit Monohydrat (4 g/mol AS) |
| | 115 g dest. Wasser |
| Zulauf 3: | 20 g Na-Peroxodisulfat (2 g/mol AS) |
| | 115 g dest. Wasser |

In einem 3 Liter fassenden 4-Hals-Rundkolben, Thermometer, Ankerrührer mit kühlbarem Rührverschluss, 40 cm Kugelkühler und kühlbarem Einleitungsrohr für Zuläufe mit automatischen Dosiervorrichtungen wurden 300 g Wasser zum Rückfluss erhitzt. Dann wurden 13.6 ml der Na-Hypophosphitlösung (Zulauf 2) rasch zugegeben und 13.6 ml (Zulauf 3) schnell zudosiert. Nun wurde unter Sieden und Rühren innerhalb von 180 Minuten mit einer Dosierrate von 6 ml/min Zulauf 1 zudosiert. Gleichzeitig wurden Zulauf 2 (Dosierrate 0,8 ml/m) und Zulauf 3 (Dosierrate 0,7 ml/min) gestartet und so zugegeben, dass Zulauf 2 ca. 5 Minuten vor beendeter Zugabe von Zulauf 1 zugegeben war. Die Zulaufzeit von Zulauf 3 war ca. 10 Minuten nach Ende Zulauf 1 beendet. Danach wurde das Reaktionsgemisch so lange (ca. 30 Minuten) bei 100°C nachpolymerisiert, bis kein Peroxid mehr nachgewiesen werden konnte. Nach Abkühlen auf 50°C wurde eine klare Polymerlösung mit einem Feststoffgehalt von 41%, einer Viskosität von 600 cps und einem Molgewicht von Mw=5000 erhalten. Kontrolle: Peroxidtest mit Teststäbchen Merckoquant 1.10011.

### Polycarbonsäure 2: Polymethacrylsäure

**Ansatz 2:**

| | |
|---|---|
| Vorlage: | 350 g dest. Wasser |
| Zulauf 1 | 860 g (10 mol) Methacrylsäure |
| | 750 g dest. Wasser |
| Zulauf 2 | 90 g Na-Hypophosphit Monohydrat (9 g/mol MAS) |
| | 210 g dest. Wasser |
| Zulauf 3 | 25 g Na-Peroxodisulfat (2.5 g/mol MAS) |
| | 135 g dest. Wasser |

In einem 3 Liter fassenden 4-Hals-Rundkolben, Thermometer, Ankerrührer mit kühlbarem Rührverschluss, 40 cm Kugelkühler und kühlbarem Einleitungsrohr für Zuläufe mit automatischen Dosiervorrichtungen wurden 300 g Wasser zum Rückfluss erhitzt. Dann wurden 13.6 ml der Na-Hypophosphitlösung (Zulauf 2) rasch zugegeben und 13.6 ml Zulauf 3 schnell zudosiert. Nun wurde unter Sieden und Rühren innerhalb von 180 Minuten mit einer Dosierrate von 6 ml/min Zulauf 1 zudosiert. Gleichzeitig wurden Zulauf 2 (Dosierrate 0.8 ml/m) und Zulauf 3 (Dosierrate 0.7 ml/min) gestartet und so zugegeben, dass Zulauf 2 ca. 5 Minuten vor beendeter Zugabe von Zulauf 1 zugegeben war. Die Zulaufzeit von Zulauf 3 war ca. 10 Minuten nach Ende Zulauf 1 beendet. Danach wurde das Reaktionsgemisch solange (ca. 30 Minuten) bei 100°C nachpolymerisiert, bis kein Peroxid mehr nachgewiesen werden konnte. Nach Abkühlen auf 50°C wurde eine klare Polymerlösung mit einem Feststoffgehalt von 41%, einer Viskosität von 1500 cps und einem Molgewicht von Mw=6500 erhalten. Kontrolle: Peroxidtest mit Teststäbchen Merckoquant 1.10011.

### Polycarbonsäure 3: Poly(acrylsäure-co-methacrylsäure)(50:50mol%)

**Ansatz 3:**

| | |
|---|---|
| Vorlage: | 340 g dest. Wasser |
| Zulauf 1 | 360 g (5 mol) Acrylsäure |
| | 430 g (5 mol) Methacrylsäure |
| | 340 g dest. Wasser |
| Zulauf 2 | 40 g Na-Hypophosphit-Monohydrat (4 g/mol AS/MAS) |
| | 90 g dest. Wasser |
| Zulauf 3 | 20 g Na-Peroxodisulfat (2 g/ mol AS/MAS) |
| | 66 g dest. Wasser |

In einem 3 Liter fassenden 4-Hals-Rundkolben, Thermometer, Ankerrührer mit kühlbarem Rührverschluss, 40 cm Kugelkühler und kühlbarem Einleitungsrohr für Zuläufe mit automatischen Dosiervorrichtungen wurden 340 g Wasser zum Rückfluss erhitzt. Dann wurden rasch 9.4 ml der Na-Hypophosphitlösung (Zulauf 2) rasch zugegeben und 9.4 ml Zulauf 3 schnell zudosiert. Nun wurde unter Sieden und Rühren innerhalb von 180 Minuten mit einer Dosierrate von 6 ml/min Zulauf 1 zudosiert. Gleichzeitig wurden Zulauf 2 (Dosierrate 0.8 ml/m) und Zulauf 3 (Dosierrate 0.7 ml/min) gestartet und so zugegeben, dass Zulauf 2 ca. 5 Minuten vor beendeter Zugabe von Zulauf 1 zugegeben war. Die Zulaufzeit von Zulauf 3 war ca. 10 Minuten nach Ende Zulauf 1 beendet. Danach wurde das Reaktionsgemisch solange (ca. 30 Minuten) bei 100°C nachpolymerisiert, bis kein Peroxid mehr nachgewiesen werden konnte. Nach Abkühlen auf 50°C wurde eine klare Polymerlösung mit einem Feststoffgehalt von 50%, einer Viskosität von 2000 cps und einem Molgewicht von Mw=5000 erhalten. Kontrolle: Peroxidtest mit Teststäbchen Merckoquant 1.10011.

### Polycarbonsäure 4: Polv(acrvlsäure-co-methacrvlsäure; 60:40 mol %)

**Ansatz 4:**

| | |
|---|---|
| Vorlage: | 330 g dest. Wasser |
| Zulauf 1 | 432 g (6 mol) Acrylsäure |
| | 344 g (4 mol) Methacrylsäure |
| Zulauf 2 | 40 g Na-Hypophosphit-Monohydrat (4 g/mol AS/MAS) |
| | 90 g dest. Wasser |
| Zulauf 3 | 20 g Na-Peroxodisulfat (2 g/mol AS/MAS) |
| | 72 g dest. Wasser |

In einem 3 Liter fassenden 4-Hals-Rundkolben, Thermometer, Ankerrührer mit kühlbarem Rührverschluss, 40 cm Kugelkühler und kühlbarem Einleitungsrohr für Zuläufe mit automatischen Dosiervorrichtungen wurden 330 g Wasser zum Rückfluss erhitzt. Dann wurden rasch 9.4 ml der Na-Hypophosphitlösung (Zulauf 2) rasch zugegeben und 9.4 ml Zulauf 3 schnell zudosiert. Nun wurde unter Sieden und Rühren innerhalb von 180 Minuten mit einer Dosierrate von 6 ml/min Zulauf 1 zudosiert. Gleichzeitig wurden Zulauf 2 (Dosierrate 0.8 ml/m) und Zulauf 3 (Dosierrate 0.7 ml/min) gestartet und so zugegeben, dass Zulauf 2 ca. 5 Minuten vor beendeter Zugabe von Zulauf 1 zugegeben war. Die Zulaufzeit von Zulauf 3 war ca. 10 Minuten nach Ende Zulauf 1 beendet. Danach wurde das Reaktionsgemisch solange (ca. 30 Minuten) bei 100°C nachpolymerisiert, bis kein Peroxid mehr nachgewiesen werden konnte. Nach Abkühlen auf 50°C wurde eine klare Polymerlösung mit einem Feststoffgehalt von 51%, einer Viskosität von 1500 cps und einem Molgewicht von Mw=4800 erhalten.

### Polycarbonsäure 5: Poly(acrylsäure-co-methacrylsäure)(40:60 mol%)

**Ansatz 5:**

| | |
|---|---|
| Vorlage | 330 g dest Wasser |
| Zulauf 1 | 288 g (4 mol) Acrylsäure |
| | 516 g (6 mol) Methacrylsäure |
| | 330 g dest. Wasser |
| Zulauf 2 | 40 g Na-Hypophosphit-Monohydrat (4 g/mol AS/MAS) |
| | 90 g dest. Wasser |
| Zulauf 3 | 23 g Na-Peroxodisulfat (2 g/ mol AS/MAS) |
| | 72 g dest Wasser |

In einem 3 Liter fassenden 4-Hals-Rundkolben, Thermometer, Ankerrührer mit kühlbarem Rührverschluss, 40 cm Kugelkühler und kühlbarem Einleitungsrohr für Zuläufe mit automatischen Dosiervorrichtungen wurden 330 g Wasser zum Rückfluss erhitzt. Dann wurden rasch 9.4 ml der Na-Hypophosphitlösung (Zulauf 2) rasch zugegeben und 9.4 ml Zulauf 3 schnell zudosiert. Nun wurde unter Sieden und Rühren innerhalb von 180 Minuten mit einer Dosierrate von 6 ml/min Zulauf 1 zudosiert. Gleichzeitig wurden Zulauf 2 (Dosierrate 0.8 ml/m) und Zulauf 3 (Dosierrate 0.7 ml/min) gestartet und so zugegeben, dass Zulauf 2 ca. 5 Minuten vor beendeter Zugabe von Zulauf 1 zugegeben war. Die Zulaufzeit von Zulauf 3 war ca. 10 Minuten nach Ende Zulauf 1 beendet. Danach wurde das Reaktionsgemisch solange (ca. 30 Minuten) bei 100°C nachpolymerisiert, bis kein Peroxid mehr nachgewiesen werden konnte. Nach Abkühlen auf 50°C wurde eine klare Polymerlösung mit einem Feststoffgehalt von 52%, einer Viskosität von 2500 cps und einem Molgewicht von Mw=5800 erhalten.

### 3.2. Herstellung von Copolvmeren durch polymeranaloge partielle Veresterung von Polycarbonsäuren mit Monoalkylpolyalkylenglykolen

### Kammpolymer P-1

In einem 2 Liter fassenden 4-Hals-Rundkolben mit mechanischem Rührer (IKA®-Rührwerk), Thermometer, Gaseinleitrohr und Destillationsbrücke wurden 170 g Polycarbonsäure 3 (entspricht etwa 1 Mol Carboxylgruppen) vorgelegt. Die Vorlage wurde auf 50°C erwärmt und anschliessend 270 g MPEG 1000 und 0.1 g Foamex 144 zugegeben. Die Reaktionsmischung wurde unter N₂-Strom auf 170°C erwärmt. Das in der Mischung enthaltene Wasser sowie das Reaktionswasser wurden kontinuierlich unter N₂-Strom abdestilliert. Mit Erreichen der Temperatur wurden 2 g einer 50%igen NaOH-Lösung und 2.5 g Jeffamin M 2070 zur Reaktionsmischung gegeben und ein Vakuum von 80 mbar angelegt. Nach 2 ½ Stunden war ein vollständiger Reaktionsumsatz erreicht. Die Polymerschmelze wurde erstarren gelassen oder aber nach dem Abkühlen auf <100°C mit Wasser auf einen Feststoffgehalt von 30% eingestellt Es wurde eine klare Polymerlösung erhalten. Der mit GPC bestimmte Umsatz ergab 99% Polymer. Molekulargewicht Mn=11000.

### Kammpolymer P-2

In einem 2 Liter fassenden 4-Hals-Rundkolben mit mechanischem Rührer (IKA®-Rührwerk), Thermometer, Gaseinleitrohr und Destillationsbrücke wurden 170 g Polycarbonsäure 3 (entspricht etwa 1 Mol Carboxylgruppen) vorgelegt. Die Vorlage wurde auf 50°C erwärmt und anschliessend 200 g MPEG 1000, 220 g MPEG 3000 und 0.1 g Foamex 144 zugegeben. Die Reaktionsmischung wurde unter N₂-Strom auf 170°C erwärmt. Das in der Mischung enthaltene Wasser sowie das Reaktionswasser wurden kontinuierlich unter N₂-Strom abdestilliert. Mit Erreichen der Temperatur wurden 2 g einer 50%igen NaOH-Lösung und 2.5 g Jeffamin M 2070 zur Reaktionsmischung gegeben und ein Vakuum von 80 mbar angelegt. Nach 2 ½ Stunden war ein vollständiger Reaktionsumsatz erreicht. Die Polymerschmelze wurde erstarren gelassen oder aber nach dem Abkühlen auf <100°C mit Wasser auf einen Feststoffgehalt von 30% eingestellt Es wurde eine klare Polymerlösung erhalten. Der mit GPC bestimmte Umsatz ergab 98.6% Polymer. Molekulargewicht Mn=11000

### Kammpolymer P-3

In einem 2 Liter fassenden 4-Hals-Rundkolben mit mechanischem Rührer (IKA®-Rührwerk), Thermometer, Gaseinleitrohr und Destillationsbrücke wurden 166 g Polycarbonsäure 4 (entspricht etwa 1 Mol Carboxylgruppen) vorgelegt. Die Vorlage wurde auf 50°C erwärmt und anschliessend 140 g MPEG 1000, 280g MPEH 3000 und 0.1 g Foamex 144 zugegeben. Die Reaktionsmischung wurde unter N₂-Strom auf 170°C erwärmt. Das in der Mischung enthaltene Wasser sowie das Reaktionswasser wurden kontinuierlich unter N₂-Strom abdestilliert. Mit Erreichen der Temperatur wurden 2 g einer 50%igen NaOH-Lösung und 2.5 g Jeffamin M 2070 zur Reaktionsmischung gegeben und ein Vakuum von 80 mbar angelegt. Nach 2 ½ Stunden war ein vollständiger Reaktionsumsatz erreicht. Die Polymerschmelze wurde erstarren gelassen oder aber nach dem Abkühlen auf <100°C mit Wasser auf einen Feststoffgehalt von 30% eingestellt. Es wurde eine klare Polymerlösung erhalten. Der mit GPC bestimmte Umsatz ergab 99,1% Polymer. Molekulargewicht Mn=10700.

### Kammpolymer P-4

In einem 2 Liter fassenden 4-Hals-Rundkolben mit mechanischem Rührer (IKA®-Rührwerk), Thermometer, Gaseinleitrohr und Destillationsbrücke wurden 170 g Polycarbonsäure 4 (entspricht etwa 1 Mol Carboxylgruppen) vorgelegt. Die Vorlage wurde auf 50°C erwärmt und anschliessend 200 g MPEG 1000, 220 g MPEG 3000 und 0.1 g Foamex 144 zugegeben. Die Reaktionsmischung wurde unter N₂-Strom auf 170°C erwärmt. Das in der Mischung enthaltene Wasser sowie das Reaktionswasser wurden kontinuierlich unter N₂-Strom abdestilliert. Mit Erreichen der Temperatur wurden 2 g einer 50%igen NaOH-Lösung und 2.5 g Jeffamin M 2070 zur Reaktionsmischung gegeben und ein Vakuum von 80 mbar angelegt. Nach 2 ½ Stunden war ein vollständiger Reaktionsumsatz erreicht. Die Polymerschmelze wurde erstarren gelassen oder aber nach dem Abkühlen auf <100°C mit Wasser auf einen Feststoffgehalt von 30% eingestellt. Es wurde eine klare Polymerlösung erhalten. Der mit GPC bestimmte Umsatz ergab 99% Polymer. Molekulargewicht Mn=10100.

### Kammpolymer P-5

In einem 2 Liter fassenden 4-Hals-Rundkolben mit mechanischem Rührer (IKA®-Rührwerk), Thermometer, Gaseinleitrohr und Destillationsbrücke wurden 170 g Polycarbonsäure 5 (entspricht etwa 1 Mol Carboxylgruppen) vorgelegt. Die Vorlage wurde auf 50°C erwärmt und anschliessend 270 g MPEG 1000 und 0.1 g Foamex 144 zugegeben. Die Reaktionsmischung wurde unter N₂-Strom auf 170°C erwärmt. Das in der Mischung enthaltene Wasser sowie das Reaktionswasser wurden kontinuierlich unter N₂-Strom abdestilliert. Mit Erreichen der Temperatur wurden 2 g einer 50%igen NaOH-Lösung und 2.5 g Jeffamin M 2070 zur Reaktionsmischung gegeben und ein Vakuum von 80 mbar angelegt. Nach 2 ½ Stunden war ein vollständiger Reaktionsumsatz erreicht. Die Polymerschmelze wurde erstarren gelassen oder aber nach dem Abkühlen auf <100°C mit Wasser auf einen Feststoffgehalt von 30% eingestellt. Es wurde eine klare Polymerlösung erhalten. Der mit GPC bestimmte Umsatz ergab 97 Polymer. Molekulargewicht Mn=10100

### Kammpolymer P-6

In einem 2 Liter fassenden 4-Hals-Rundkolben mit mechanischem Rührer (IKA®-Rührwerk), Thermometer, Gaseinleitrohr und Destillationsbrücke wurden 170 g Polycarbonsäure 5 (entspricht etwa 1 Mol Carboxylgruppen) vorgelegt. Die Vorlage wurde auf 50°C erwärmt und anschliessend 200 g MPEG 1000, 220 g MPEG 3000 und 0.1 g Foamex 144 zugegeben. Die Reaktionsmischung wurde unter N₂-Strom auf 170°C erwärmt. Das in der Mischung enthaltene Wasser sowie das Reaktionswasser wurden kontinuierlich unter N₂-Strom abdestilliert. Mit Erreichen der Temperatur wurden 2 g einer 50%igen NaOH-Lösung und 2.5 g Jeffamin M 2070 zur Reaktionsmischung gegeben und ein Vakuum von 80 mbar angelegt. Nach 2 ½ Stunden war ein vollständiger Reaktionsumsatz erreicht. Die Polymerschmelze wurde erstarren gelassen oder aber nach dem Abkühlen auf <100°C mit Wasser auf einen Feststoffgehalt von 30% eingestellt. Es wurde eine klare Polymerlösung erhalten. Der mit GPC bestimmte Umsatz ergab 99% Polymer. Molekulargewicht Mn=11000

### Kammpolymer P-7

In einem 2 Liter fassenden 4-Hals-Rundkolben mit mechanischem Rührer (IKA®-Rührwerk), Thermometer, Gaseinleitrohr und Destillationsbrücke wurden 170 g Polycarbonsäure 3 (entspricht etwa 1 Mol Carboxylgruppen) vorgelegt. Die Vorlage wurde auf 50°C erwärmt und anschliessend 340 g MPEG 1000 und 0.1 g Foamex 144 zugegeben. Die Reaktionsmischung wurde unter N₂-Strom auf 170°C erwärmt. Das in der Mischung enthaltene Wasser sowie das Reaktionswasser wurden kontinuierlich unter N₂-Strom abdestilliert. Mit Erreichen der Temperatur wurden 2 g einer 50%igen NaOH-Lösung und 2.5 g Jeffamin M 2070 zur Reaktionsmischung gegeben und ein Vakuum von 80 mbar angelegt. Nach 2 ½ Stunden war ein vollständiger Reaktionsumsatz erreicht. Die Polymerschmelze wurde erstarren gelassen oder aber nach dem Abkühlen auf <100°C mit Wasser auf einen Feststoffgehalt von 30% eingestellt. Es wurde eine klare Polymerlösung erhalten. Der mit GPC bestimmte Umsatz ergab 99% Polymer. Molekulargewicht Mn=11300.

### Vergleichspolymer V-1

In einem 2 Liter fassenden 4-Hals-Rundkolben mit mechanischem Rührer (IKA®-Rührwerk), Thermometer, Gaseinleitrohr und Destillationsbrücke wurden 154 g Polycarbonsäure 1 (entspricht etwa 1 Mol Carboxylgruppen) vorgelegt. Die Vorlage wurde auf 50°C erwärmt und anschliessend 340 g MPEG 1000 und 0.1 g Foamex 144 zugegeben. Die Reaktionsmischung wurde unter N₂-Strom auf 170°C erwärmt. Das in der Mischung enthaltene Wasser sowie das Reaktionswasser wurden kontinuierlich unter N₂-Strom abdestilliert. Mit Erreichen der Temperatur wurden 2 g einer 50%igen NaOH-Lösung und 2.5 g Jeffamin M 2070 zur Reaktionsmischung gegeben und ein Vakuum von 80 mbar angelegt. Nach 2 ½ Stunden war ein vollständiger Reaktionsumsatz erreicht. Die Polymerschmelze wurde erstarren gelassen oder aber nach dem Abkühlen auf <100°C mit Wasser auf einen Feststoffgehalt von 30% eingestellt. Es wurde eine klare Polymerlösung erhalten. Der mit GPC bestimmte Umsatz ergab 97% Polymer. Molekulargewicht Mn=10900

### Vergleichspolymer V-2

In einem 2 Liter fassenden 4-Hals-Rundkolben mit mechanischem Rührer (IKA®-Rührwerk), Thermometer, Gaseinleitrohr und Destillationsbrücke wurden 242 g Polycarbonsäure 1 (entspricht etwa 1 Mol Carboxylgruppen) vorgelegt. Die Vorlage wurde auf 50°C erwärmt und anschliessend 340 g MPEG 1000 und 0.1 g Foamex 144 zugegeben. Die Reaktionsmischung wurde unter N₂-Strom auf 170°C erwärmt. Das in der Mischung enthaltene Wasser sowie das Reaktionswasser wurden kontinuierlich unter N₂-Strom abdestilliert. Mit Erreichen der Temperatur wurden 2 g einer 50%igen NaOH-Lösung und 2.5 g Jeffamin M 2070 zur Reaktionsmischung gegeben und ein Vakuum von 80 mbar angelegt. Nach 2 ½ Stunden war ein vollständiger Reaktionsumsatz erreicht. Die Polymerschmelze wurde erstarren gelassen oder aber nach dem Abkühlen auf <100°C mit Wasser auf einen Feststoffgehalt von 30% eingestellt. Es wurde eine klare Polymerlösung erhalten. Der mit GPC bestimmte Umsatz ergab 98.9% Polymer. Molekulargewicht Mn=11200.

### Vergleichspolymer V-3

188 g (1 mol) Vergleichspolymer V-1 und 276 g (1 mol) Vergleichspolymer V-2 wurden unter kräftigem Rühren gemischt. Es entstand eine klare Lösung. Molekulargewicht Mn=11000

### 3.3. Herstellung von Kammpolymeren durch radikalische Polymerisation

### Herstellung von Ester 1

Azeotrope teilweise Veresterung eines Gemisches von Acrylsäure und Methacrylsäure im molaren Verhältnis von 1:1 mit MPEG 1000.

In einem 3 Liter fassenden Glasreaktor mit Wasserabscheider und Gaseinleitungsrohr wurden 1000 g MPEG 1000, 133.2 g Acrylsäure (1.85 Mol), 159.1 g (1.85 Mol) Methacrylsäure, 13.5 g p-Toluolsulfonsäure-Monohydrat, 0.5 g Phenothiazin und 250 g Toluol vorgelegt. Anschliessend wurde unter Durchleiten von Stickstoff auf 130°C erwärmt und während 6.5 Stunden unter Rückfluss gehalten. Das entstandene Reaktionswasser wurde im Wasserabscheider abgetrennt und das ausgekreiste Toluol in den Reaktor zurückgeleitet. Die Säurezahl der Reaktionsmischung betrug 95.2 mg KOH/g. Der Umsatz des Methylpolyethylenglykols wurde mit GPC bestimmt und betrug 94.7%.

### Herstellung von Ester 2

Azeotrope teilweise Veresterung eines Gemisches von Acrylsäure und Methacrylsäure im molaren Verhältnis von 1:1 mit MPEG 1000 und MPEG 3000.

In einem 3 Liter fassenden Glasreaktor mit Wasserabscheider und Gaseinleitungsrohr wurden 740g MPEG 1000, 814 g MPEG 3000, 133.2 g Acrylsäure (1.85 Mol), 159.1 g (1.85 Mol) Methacrylsäure, 13.5 g p-Toluolsulfonsäure-Monohydrat, 0.5 g Phenothiazin und 250 g Toluol vorgelegt. Anschliessend wurde unter Durchleiten von Stickstoff auf 130°C erwärmt und während 7 Stunden unter Rückfluss gehalten. Das entstandene Reaktionswasser wurde im Wasserabscheider abgetrennt und das ausgekreiste Toluol in den Reaktor zurückgeleitet. Die Säurezahl der Reaktionsmischung betrug 96 mg KOH/g. Der Umsatz des Methylpolyethylenglykols wurde mit GPC bestimmt und betrug 93.8%.

### Vergleichspolymer V-4

| | |
|---|---|
| Vorlage: | 800 g dest. Wasser |
| Zulauf 1 | 700 g Ester 1 |
| Zulauf 2 | 6 g Na-Hypophosphit-Monohydrat |
| | 100 g dest. Wasser |
| Zulauf 3 | 8.8 g Na-Peroxodisulfat |
| | 100 g dest. Wasser |

In einem 3 Liter fassenden Reaktor mit automatischen Dosiervorrichtungen, Wasserabscheider und Gaseinleitungsrohr mit Rückflusskühler wurden 800 g Wasser unter Durchleiten von Stickstoff zum Sieden erhitzt und unter Aufrechterhalten des Rückflusses gleichzeitig die Zuläufe 1, 2, und 3 innerhalb von 5 Stunden zudosiert. Kleine Mengen des aus Zulauf 1 herrührenden Toluols wurden im Wasserabscheider abgetrennt und das gleichzeitig abgeschiedene Wasser in den Reaktor zurückgeleitet. Nach beendigten Zuläufen wurde das Reaktionsgemisch noch 2 Stunden nachpolymerisiert und auf 50°C abgekühlt. Es wurde eine klare Lösung mit einem Feststoffgehalt von 38.9% erhalten, die durch Zugabe von Wasser auf 30% verdünnt wurde. Der mit GPC bestimmte Polymergehalt betrug ca. 98%. Molgewicht Mₙ = 10200.

### Vergleichspolymer V-5

| | |
|---|---|
| Vorlage | 800 g dest. Wasser |
| Zulauf 1 | 998 g Ester 2 |
| Zulauf 2 | 6 g Na-Hypophosphit-Monohydrat |
| | 100 g dest. Wasser |
| Zulauf 3 | 8.8 g Na-Peroxodisulfat |
| | 100 g dest. Wasser |

In einem 3 Liter fassenden Reaktor mit automatischen Dosiervorrichtungen, Wasserabscheider und Gaseinleitungsrohr mit Rückflusskühler wurden 800 g Wasser unter Durchleiten von Stickstoff zum Sieden erhitzt und unter Aufrechterhalten des Rückflusses gleichzeitig die Zuläufe 1, 2, und 3 innerhalb von 6 Stunden zudosiert. Kleine Mengen des aus Zulauf 1 herrührenden Toluols wurden im Wasserabscheider abgetrennt und das gleichzeitig abgeschiedene Wasser in den Reaktor zurückgeleitet. Nach beendigten Zuläufen wurde das Reaktionsgemisch noch 2 Stunden nachpolymerisiert und auf 50°C abgekühlt Es wurde eine klare Lösung mit einem Feststoffgehalt von 41 % erhalten, die durch Zugabe von Wasser auf 30% verdünnt wurde. Der mit GPC bestimmte Polymergehalt betrug ca. 97%. Molgewicht Mₙ = 10700.

### Vergleichspolymer V-6

Mighty 150 (KAO Corp. Tokyo)
Natriumsalz eines sulfonierten Naphthalin-Formaldehyd-Polykondensates mit einem Molgewicht von 5000-6000 g/mol

### 4. Herstellung von Zementmörteln

Untersuchung und Vergleich der verarbeitungstechnischen Eigenschaften von die erfindungsgemässen Copolymere und Vergleichspolymere enthaltenden Zementmörteln.

### Mörteltests

Die Wirksamkeit der erfindungsgemässen Polymere wurde im Mörtel getestet. Der Mörtel hatte die folgende Zusammensetzung (Tabelle 2)

**Tabelle 2:**

| Zusammensetzung der Mörtelmischung (MM): (Grösstkorn 8 mm) | Menge |
|---|---|
| Zement (Schweizer CEM I 42.5) | 750 g |
| Kalksteinfiller | 141 g |
| Sand 0-1 mm | 738 g |
| Sand 1-4 mm | 1107 g |
| Sand 4-8 mm | 1154 g |

Die Sande, der Filler und der Zement wurden 1 Minute in einem Hobart-Mischer trocken gemischt. Innerhalb von 30 Sekunden wurde das Anmachwasser zugegeben, in dem das Kammpolymer enthalten war. Nach dem Zugeben des Anmachwassers wurde der Mörtel noch 2,5 min gemischt. Die Menge des Kammpolymers ist in Tabelle 3 bezogen auf den Zement angegeben. Die Kammpolymere wurden als 30%ige wässrige Dispersion eingesetzt. Die 30%ige wässrige Lösung enthält zudem 0.1 Gew.-% Entschäumer. Die Gesamt-Mischzeit nass war 3 Minuten. Der Wasser/Zement-Wert (w/z-Wert) betrug 0.42. Das Ausbreitmaß des Mörtels wurde gemäss EN 1015-3 bestimmt. Die Resultate sind in Tabelle 3 zusammengefasst.

**Tabelle 3:**

| **Nr.** | **Zusatz-mittel** | **w/z** | **Gew.-% auf Zement** | **ABM (mm)** | | | | **ΔABM in % nach 90 min** |
|---|---|---|---|---|---|---|---|---|
| | | | | **0 min** | **30 min** | **60 min** | **90 min** | |
| **M-1** | **P-1** | 0.42 | 0.24 | 200 | 200 | 198 | 195 | 2.5 |
| **M-2** | **P-2** | 0.42 | 0.24 | 213 | 218 | 223 | 218 | -2.4 |
| **M-3** | **P-3** | 0.42 | 0.24 | 208 | 204 | 201 | 197 | 3.3 |
| **M-4** | **P-4** | 0.42 | 0.24 | 202 | 220 | 225 | 212 | -5 |
| **M-5** | **P-5** | 0.42 | 0.24 | 211 | 213 | 210 | 209 | 1 |
| **M-6** | **P-6** | 0.42 | 0.24 | 210 | 215 | 207 | 205 | 2.4 |
| **M-7** | **P-7** | 0.42 | 0.24 | 218 | 216 | 213 | 212 | 2.8 |
| **VM-1** | **V-1** | 0.42 | 0.24 | 222 | 224 | 210 | 172 | 22.5 |
| **VM-2** | **V-2** | 0.42 | 0.24 | 208 | 186 | 180 | 180 | 13.5 |
| **VM-3** | **V-3** | 0.42 | 0.24 | 212 | 191 | 180 | 174 | 18 |
| **VM-4** | **V-4** | 0.42 | 0.24 | 204 | 202 | 162 | 138 | 25 |
| **VM-5** | **V-5** | 0.42 | 0.24 | 215 | 204 | 176 | 153 | 19.8 |
| **VM-6** | **V-6** | 0.42 | 0.48 | 220 | 190 | 158 | - | |

Die in Tabelle 3 gezeigten Ausbreitmaße (ABM), gemessen in mm, wurden nach 0, 30, 60 und 90 Minuten gemessen. Die Dosierungen der Zusatzmittel sind angegeben in Gew.-% Feststoff der Kammpolymere-**1** bis **P-7** und der Vergleichspolymeren **V-1** bis **V-6,** bezogen auf das Zementgewicht der Versuchsmörtel.

Die Resultate in Tabelle 3 zeigen, dass die erfindungsgemässen Polymere **P-1** bis **P-7** verglichen mit dem Vergleichspolymeren **V-1 bis V-6** ausgezeichnete verflüssigende Eigenschaften über längere Zeiträume aufweisen. So weisen die erfindungsgemässen Mischungen M-1 bis M-7 90 Minuten nach der Herstellung nur eine sehr geringe Abnahme des Ausbreitmaßes von höchstens etwa 3% auf, während bei allen Vergleichsmörteln VM-1 bis VM-6 eine starke Abnahme von 13.5-25% gemessen wird. In den Mischungen M-2 und M-4 hatte das Ausbreitmaß überraschend sogar um 2.4% bzw. 5% zugenommen. Überraschenderweise war der Effekt bei Verwendung von Kammpolymeren P-1 und P-2, die durch polymeranaloge Veresterung hergestellt wurden, deutlich ausgeprägter als bei den Polymeren V-4 und V-5, die durch radikalische Polymerisation der monomeren Methylpolyglykolester der Acryl- und Methacrylsäure mit Methacrylsäure und Acrylsäure hergestellt wurden. Die unterschiedlich hergestellten Kammpolymere sind dabei direkt vergleichbar, wie der Anteil an Seitenketten und Monomeren in Tabelle 3 zeigt. Die Vergleichsmischungen VM-4 und VM-5 zeigen ein hohes Anfangsausbreitmaß, aber einen starken Abfall um 25% bzw. 19.8% nach 90 Minuten. Die Mischungen M-1 und M-2, welche die erfindungsgemässen Kammpolymere-1 und P-2 mit gleicher stöchiometrischer Zusammensetzung wie V-4 und V-5 enthalten, zeigen dagegen eine beinahe konstante Verarbeitbarkeit über den gesamten Zeitraum von 90 Minuten.

Als Referenzpolymer V-6 diente das kommerzielle Produkt Mighty 150. Wie die Resultate für die Vergleichsmischung VM-6 zeigen, wird von diesem Polymer etwa die doppelte Dosierung benötigt, um ein vergleichbares Anfangsausbreitmaß von über 200 mm zu erreichen. Allerdings steift der Mörtel viel schneller an, so dass nach 90 Minuten kein Ausbreitmaß mehr gemessen werden kann. Es fällt auch auf, dass bei dieser hohen Dosierung der Mörtel zur Segregation neigt (sogenanntes "Bluten") was bei den erfindungsgemäßen Mischungen nicht der Fall ist.

Anhand der Beispiele kann somit gezeigt werden, dass bei der erfindungsgemäßen Verwendung von Kammpolymeren, die durch polymeranaloge Reaktion hergestellt wurden, eine ausgezeichnete Verflüssigung und zudem eine verlängerte Verarbeitbarkeit erreicht wird.

## Patentansprüche

1. Verwendung eines Kammpolymers zur Verbesserung der Verarbeitbarkeit von hydraulisch abbindenden Zusammensetzungen,
wobei das Kammpolymer über Ester-, Amid- und/oder Ethergruppen an eine Hauptkette angebundene Seitenketten aufweist,
wobei die Hauptkette mindestens eine Acrylsäureeinheit **A** oder ein Salz davon und mindestens eine Methacrylsäureeinheit **M** oder ein Salz davon aufweist,
und wobei das Kammpolymer mindestens einer Struktureinheit **B** der Formel (I) umfasst; 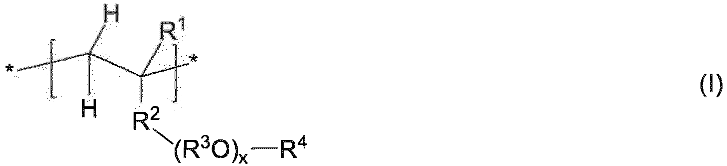 wobei
R¹ unabhängig voneinander für H oder CH₃ steht;
R² unabhängig voneinander für ein Estergruppe -CO-O- oder für eine Amidgruppe -CO-NH- steht;
R³ unabhängig voneinander für eine C₂ - C₆ Alkylengruppe, insbesondere für eine Ethylen- oder Propylengruppe steht,
R⁴ unabhängig voneinander für H, einen C₁ - C₁₂ Alkyl- oder Cycloalkylrest, einen C₇ - C₂₀ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, steht, und
x unabhängig voneinander ein Wert zwischen 3 und 250 ist,
wobei die Hauptkette des Kammpolymers ein lineares Copolymer ist, dass aus der mindestens einen Acrylsäureeinheit **A** oder dem Salz oder Anhydrid davon, und der Methacrylsäureeinheit **M** oder dem Salz oder Anhydrid davon durch Polymerisation erhalten wurde,
wobei die Struktureinheit **B** Bestandteil dieses linearen Copolymers ist und wobei das Kammpolymer an der Gesamtzahl aller (R³O)ₓ-Einheiten einen Anteil von Ethylenoxideinheiten von mindestens 30 Mol-% aufweist und wobei das Kammpolymer durch Veresterung und/oder Amidierung einer Polycarbonsäure oder einem Salz oder Anhydrid davon hergestellt wurde.

2. Verwendung nach Anspruch 1, wobei das Kammpolymer 5 bis 95 Mol-% Acrylsäureeinheiten **A,** 5 bis 95 Mol-% Methacrylsäureeinheiten **M** und 5 bis 50 Gew.-% Monomere mit über Ester-, Amid- und/oder Ethergruppen angebundene Seitenketten aufweist, jeweils bezogen auf die Gesamtzahl aller monomeren Einheiten in der Hauptkette des Kammpolymers.

3. Verwendung nach mindestens einem der vorhergehenden Ansprüche, wobei das Kammpolymer mindestens eine Struktureinheit **B** der Formel (I) mit R¹ gleich H und mindestens eine Struktureinheit **B** der Formel (I) mit R¹ gleich CH₃ aufweist.

4. Verwendung gemäss einem der vorhergehenden Ansprüche, wobei das Kammpolymer an der Gesamtzahl aller (R³O)ₓ-Einheiten einen Anteil von 50 bis 100 Mol-%, aufweist.

5. Verwendung nach mindestens einem der vorhergehenden Ansprüche, wobei das Kammpolymer mindestens eine weitere Struktureinheit **C** aufweist, die von den Struktureinheiten **A, B** und **M** verschieden ist, und die ausgewählt ist aus einer Ether-, Ester, Amid- oder Imideinheit, einer Säureeinheit, ausgewählt aus Carbonsäure-, Sulfonsäure-, Phosphonsäure, Phosphorsäureester-, Carbonylamidomethylpropansulfonsäure und deren Salzen, oder einer Polyoxyalkylenoxycarbonyl-, Polyoxyalkylenaminocarbonyl-, Polyoxyalkylenoxyalkyl-, Polyoxyalkylenoxy-, Hydroxyethyloxycarbonyl-, Acetoxy-, Phenyl- oder *N*-Pyrrolidonylgruppe.

6. Verwendung nach mindestens einem der vorhergehenden Ansprüche, wobei das Kammpolymer
5 bis 95 Mol-%, vorzugsweise 10 bis 80 Mol-% Acrylsäureeinheiten **A,**
5 bis 95 Mol-%, vorzugsweise 10 bis 80 Mol-% Methacrylsäureeinheiten **M,**
5 bis 50 Mol-%, vorzugsweise 10 bis 40 Mol-% der Struktureinheit **B,** und
0 bis 30 Mol-%, vorzugsweise 0 bis 15 Mol-% der Struktureinheit **C** umfasst,
jeweils bezogen auf die Gesamtzahl aller monomeren Einheiten in der Hauptkette des Kammpolymers.

7. Verwendung nach mindestens einem der vorhergehenden Ansprüche, wobei das Kammpolymer
30 bis 70 Mol-%, vorzugsweise 40 bis 60 Mol-% Acrylsäureeinheiten **A,**
30 bis 70 Mol-%, vorzugsweise 40 bis 60 Mol-% Methacrylsäureeinhei**ten M,**
5 bis 50 Mol-%, vorzugsweise 10 bis 40 Mol-% der Struktureinheit **B,** und
0 bis 30 Mol-%, vorzugsweise 0 bis 15 Mol-% der Struktureinheit **C** umfasst,
jeweils bezogen auf die Gesamtzahl aller monomeren Einheiten in der Hauptkette des Kammpolymers.

8. Verwendung gemäss mindestens einem der vorhergehenden Ansprüche, wobei die Veresterung und/oder Amidierung erfolgt durch die Reaktion von
a) mindestens einer Polycarbonsäure umfassend mindestens eine Acrylsäureeinheit **A** und mindestens eine Methacrylsäureeinheit **M,** oder einem Salz oder Anhydrid dieser Polycarbonsäure; und
b) mindestens einer Verbindung, ausgewählt aus der Gruppe bestehend aus einer Monohydroxyverbindung **E** der Formel (II)
HO-(R³O)ₓ-R⁴ (II)
und einer Monoaminverbindung **F** der Formel (III)
NH₂-(R₃O)ₓ-R⁴ (III)
wobei R³, R⁴ und x unabhängig voneinander ausgewählt sind wie oben angegeben.

9. Verwendung nach mindestens einem der vorhergehenden Ansprüche, wobei das hydraulische Bindemittel ausgewählt ist aus der Gruppe bestehend aus Zement, Gips, gebranntem Kalk und Mischungen von Zement mit Flugasche, Silica fume, Schlacke, Hüttensand oder Kalksteinfüller.

10. Verwendung nach mindestens einem der vorhergehenden Ansprüche, wobei das Ausbreitmaß der hydraulisch abbindenden Zusammensetzung, gemessen nach EN 1015-3, für mindestens 60 Minuten, bevorzugt für mindestens 90 Minuten, um nicht mehr als 5% abnimmt.

11. Verwendung nach mindestens einem der Ansprüche 1 - 10, wobei wenigstens ein Teil des Kammpolymers, insbesondere sämtliches Kammpolymer, vor und/oder während einem Mahlvorgang wenigstens einer Komponente der hydraulisch abbindenden Zusammensetzung beigegeben wird.

12. Verwendung nach Anspruch 11 wobei das Kammpolymer vor und/oder während einem Mahlvorgang von Zementrohstoffen, Zementklinker, Zement und/oder Zementzusatzstoffen beigegeben wird.

13. Verwendung eines Kammpolymers als Mahlhilfsmittel, wie es in einem der Ansprüche 1-10 definiert ist, in einem Mahlvorgang, insbesondere zu Verbesserung der Mahleffizienz.

## Claims

1. Use of a comb polymer for improving the processing of hydraulically setting compositions,
wherein the comb polymer has side chains bound to a main chain via ester, amide and/or ether groups, wherein the main chain has at least one acrylic acid unit **A** or a salt thereof and at least one methacrylic acid unit **M** or a salt thereof,
and wherein the comb polymer comprises at least one structural unit **B** of the formula (I); 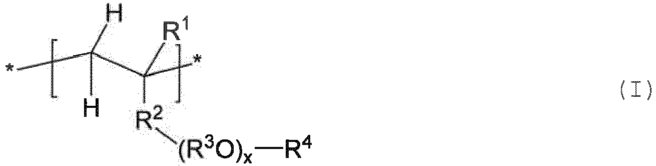 wherein
R¹, independently of one another, is H or CH₃;
R², independently of one another, is an ester group -COO- or an amide group -CO-NH-;
R³, independently of one another, is a C₂ - C₆ alkylene group, in particular an ethylene or propylene group, R⁴, independently of one another, is H, a C₁ - C₁₂ alkyl or cycloalkyl moiety, a C₇ - C₂₀ alkylaryl or aralkyl moiety or a substituted or unsubstituted aryl moiety or a univalent organic moiety having from 1 to 30 C atoms which optionally has hetero atoms, and
x, independently of one another, is a value between 3 and 250,
wherein the main chain of the comb polymer is a linear copolymer obtained from the at least one acrylic acid unit **A** or the salt or anhydride thereof and the methacrylic acid unit **M** or the salt or anhydride thereof by a polymerization,
wherein the structural unit **B** is a component of this linear copolymer and wherein the comb polymer has a proportion of ethylene oxide units of at least 30 mol% of the total number of all (R³0)x units and
wherein the comb polymer has been prepared by an esterification and/or amidation of a polycarboxylic acid or a salt or an anhydride thereof.

2. Use according to Claim 1, wherein the comb polymer has from 5 to 95 mol % of acrylic acid units. A, from 5 to 95 mol % of methacrylic acid units M and from 5 to 50% by weight of monomers having side chains bound via ester, amide and/or ether groups, based in each case on the total number of all monomer units in the main chain of the comb polymer.

3. Use according to at least one of the preceding claims, wherein the comb polymer comprises at least one structural unit **B** of the formula (I) with R¹ equal to H and at least one structural unit **B** of the formula (I) with R¹ equal to CH₃.

4. Use according to any one of the preceding claims, wherein the comb polymer has a proportion of from 50 to 100 mol % of the total number of all (R³O)ₓ units.

5. Use according to at least one of the preceding claims, wherein the comb polymer comprises at least one additional structural unit **C** which differs from the structural units **A, B,** and **M** and which is selected from an ether, ester, amide, or imide unit, an acid unit selected from carboxylic acid, sulfonic acid, phosphonic acid, phosphoric acid ester, carbonylamidomethylpropanesulfonic acid and salts thereof, or a polyoxyalkyleneoxycarbonyl, polyoxyalkyleneaminocarbonyl, polyoxyalkyleneoxyalkyl, polyoxyalkyleneoxy, hydroxyethyloxycarbonyl, acetoxy, phenyl, or N-pyrrolidonyl group.

6. Use according to at least one of the preceding claims, wherein the comb polymer comprises
from 5 to 95 mol %, preferably from 10 to 80 mol % of acrylic acid units **A,**
from 5 to 95 mol %, preferably from 10 to 80 mol % of methacrylic acid units **M,**
from 5 to 50 mol %, preferably from 10 to 40 mol % of the structural unit **B,** and
from 0 to 30 mol %, preferably from 0 to 15 mol % of the structural unit **C,**
based in each case on the total number of all monomer units in the main chain of the comb polymer.

7. Use according to at least one of the preceding claims, wherein the comb polymer comprises
from 30 to 70 mol %, preferably from 40 to 60 mol % of acrylic acid units **A,**
from 30 to 70 mol %, preferably from 40 to 60 mol % of methacrylic acid units **M,**
from 5 to 50 mol %, preferably from 10 to 40 mol % of the structural unit **B,** and
from 0 to 30 mol %, preferably from 0 to 15 mol % of the structural unit **C,**
based in each case on the total number of all monomer units in the main chain of the comb polymer.

8. Use according to at least one of the preceding claims, wherein the esterification and/or amidation occurs by the reaction of
a) at least one polycarboxylic acid comprising at least one acrylic acid unit **A** and at least one methacrylic acid unit **M,** or a salt or anhydride of this polycarboxylic acid; and
b) at least one compound selected from the group consisting of a monohydroxy compound **E** of the formula (II)
HO-(R³O)ₓ-R⁴ (II)
and a monoamine compound **F** of the formula (III)
NH₂-(R³O)ₓ-R⁴ (III)
wherein R³, R⁴, and x are selected independently of one another as mentioned above.

9. Use according to at least one of the preceding claims, wherein the hydraulic binder is selected from the group consisting of cement, plaster, caustic lime and mixtures of cement with fly ash, silica fume, slag, slag sand, or limestone filler.

10. Use according to at least one of the preceding claims, wherein the slump-flow value of the hydraulically setting composition measured according to EN 1015-3 does not decrease by more than 5% during at least 60 minutes, preferably during at least 90 minutes.

11. Use according to at least one of claims 1 to 10, wherein at least a portion of the comb polymer, in particular all of the comb polymer, is added to at least one component of the hydraulically setting composition before and/or during a grinding process.

12. Use according to claim 11, wherein the comb polymer is added before and/or during a grinding process of cement raw materials, cement clinker, cement and/or cement additives.

13. Use of a comb polymer defined in any one of claims 1 to 10 as grinding aid in a grinding process in particular for improving the grinding efficiency.

## Revendications

1. Utilisation d'un polymère en peigne pour l'amélioration de l'usinabilité de compositions à prise hydraulique,
le polymère en peigne comprenant des chaînes latérales reliées par des groupes ester, amide et/ou éther à une chaîne principale,
la chaîne principale comprenant au moins une unité acide acrylique **A** ou un sel de celle-ci et au moins une unité acide méthacrylique **M** ou un sel de celle-ci,
et le polymère en peigne comprenant au moins une unité structurale **B** de formule (I) : 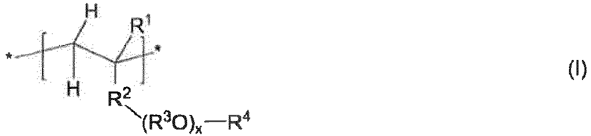 dans laquelle
les R¹ représentent indépendamment les uns des autres H ou CH₃ ;
les R² représentent indépendamment les uns des autres un groupe ester -CO-O- ou un groupe amide -CO-NH- ;
les R³ représentent indépendamment les uns des autres un groupe alkylène en C₂-C₆, notamment un groupe éthylène ou propylène ;
les R⁴ représentent indépendamment les uns des autres H, un radical alkyle ou cycloalkyle en C₁-C₁₂, un radical alkylaryle ou aralkyle en C₇-C₂₀, ou un radical
aryle substitué ou non substitué, ou un radical organique monovalent de 1 à 30 atomes C, qui comprend éventuellement des hétéroatomes ; et
les x représentent indépendamment les uns des autres une valeur comprise entre 3 et 250,
la chaîne principale du polymère en peigne étant un copolymère linéaire,
qui a été obtenu par polymérisation à partir de ladite au moins une unité acide acrylique **A** ou le sel ou anhydride de celle-ci, et de l'unité acide méthacrylique **M** ou le sel ou anhydride de celle-ci,
l'unité structurale **B** étant un constituant de ce copolymère linéaire et
le polymère en peigne comprenant, par rapport au nombre total de toutes les unités (R³O)ₓ, une proportion d'unités oxyde d'éthylène d'au moins 30 % en moles, et le polymère en peigne ayant été fabriqué par estérification et/ou amidation d'un acide polycarboxylique ou d'un sel ou anhydride de celui-ci.

2. Utilisation selon la revendication 1, dans laquelle le polymère en peigne comprend 5 à 95 % en moles d'unités acide acrylique **A,** 5 à 95 % en moles d'unités acide méthacrylique **M** et 5 à 50 % en poids de monomères comprenant des chaînes latérales reliées par des groupes ester, amide et/ou éther, à chaque fois par rapport au nombre total de toutes les unités monomères dans la chaîne principale du polymère en peigne.

3. Utilisation selon au moins l'une quelconque des revendications précédentes, dans lequel le polymère en peigne comprend au moins une unité structurale **B** de formule (I) avec R¹ représentant H et au moins une unité structurale **B** de formule (I) avec R¹ représentant CH₃.

4. Utilisation selon l'une quelconque des revendications précédentes, dans laquelle le polymère en peigne présente, par rapport au nombre total de toutes les unités (R³O)ₓ, une proportion de 50 à 100 % en moles.

5. Utilisation selon l'une quelconque des revendications précédentes, dans laquelle le polymère en peigne comprend au moins une unité structurale **C** supplémentaire, qui est différente des unités structurales **A, B** et **M,** et qui est choisie parmi une unité éther, ester, amide ou imide, une unité acide, choisie parmi un groupe acide carboxylique, acide sulfonique, acide phosphonique, ester d'acide phosphorique, acide carbonylamidométhylpropane-sulfonique et ses sels, ou un groupe polyoxyalkylène-oxycarbonyle, polyoxyalkylène-aminocarbonyle, polyoxyalkylène-oxyalkyle, polyoxyalkylène-oxy, hydroxyéthyloxycarbonyle, acétoxy, phényle ou N-pyrrolidonyle.

6. Utilisation selon au moins l'une quelconque des revendications précédentes, dans laquelle le polymère en peigne comprend :
5 à 95 % en moles, de préférence 10 à 80 % en moles, d'unités acide acrylique **A,**
5 à 95 % en moles, de préférence 10 à 80 % en moles, d'unités acide méthacrylique **M,**
5 à 50 % en moles, de préférence 10 à 40 % en moles, de l'unité structurale **B,**
et
0 à 30 % en moles, de préférence 0 à 15 % en moles, de l'unité structurale **C**,
à chaque fois par rapport au nombre total de toutes les unités monomères dans la chaîne principale du polymère en peigne.

7. Utilisation selon au moins l'une quelconque des revendications précédentes, dans laquelle le polymère en peigne comprend :
30 à 70 % en moles, de préférence 40 à 60 % en moles, d'unités acide acrylique **A,**
30 à 70 % en moles, de préférence 40 à 60 % en moles, d'unités acide méthacrylique **M,**
5 à 50 % en moles, de préférence 10 à 40 % en moles, de l'unité structurale **B,**
et
0 à 30 % en moles, de préférence 0 à 15 % en moles, de l'unité structurale **C,**
à chaque fois par rapport au nombre total de toutes les unités monomères dans la chaîne principale du polymère en peigne.

8. Utilisation selon au moins l'une quelconque des revendications précédentes, dans laquelle l'estérification et/ou l'amidation ont lieu par la réaction de :
a) au moins un acide polycarboxylique comprenant au moins une unité acide acrylique **A** et au moins une unité acide méthacrylique **M,** ou un sel ou anhydride de cet acide polyacrylique ; et
b) au moins un composé choisi dans le groupe constitué par un composé monohydroxy **E** de formule (II)
HO-(R³O)ₓ-R⁴ (II)
et un composé monoamine **F** de formule (III)
NH₂-(R³O)ₓ-R⁴ (III)
R³, R⁴ et x étant choisis indépendamment les uns des autres tel qu'indiqué précédemment.

9. Utilisation selon au moins l'une quelconque des revendications précédentes, dans laquelle le liant hydraulique est choisi dans le groupe constitué par le ciment, le gypse, la chaux calcinée et les mélanges de ciment avec des cendres volantes, de la fumée de silice, des scories, du laitier granulé ou des agents de remplissage calcaires.

10. Utilisation selon au moins l'une quelconque des revendications précédentes, dans laquelle l'étalement de la composition à prise hydraulique, mesuré selon EN 1015-3, ne diminue pas de plus de 5 % pendant au moins 60 minutes, de préférence pendant au moins 90 minutes.

11. Utilisation selon au moins l'une quelconque des revendications 1 à 10, dans laquelle au moins une partie du polymère en peigne, notamment la totalité du polymère en peigne, est ajouté à au moins un composant de la composition à prise hydraulique avant et/ou pendant un processus de broyage.

12. Utilisation selon la revendication 11, dans laquelle le polymère en peigne est ajouté avant et/ou pendant un processus de broyage de matières premières de ciment, de clinker de ciment, de ciment et/ou d'additifs de ciment.

13. Utilisation d'un polymère en peigne en tant qu'adjuvant de broyage, tel que défini dans l'une quelconque des revendications 1 à 10, dans un processus de broyage, notamment pour améliorer l'efficacité de broyage.
